# EUROPÄISCHE PATENTSCHRIFT

(11) **EP 3 639 663 B1**
(45) Veröffentlichungstag und Bekanntmachung des Hinweises auf die Patenterteilung: **07.10.2020**
(21) Anmeldenummer: 19203514.5
(22) Anmeldetag: 16.10.2019
(51) Int. Cl.: A01N 37/08, A01P 3/00, A01N 37/10, A01N 57/02, A01N 65/40

(54) **ZUSAMMENSETZUNG UND VERFAHREN ZUR VERBESSERUNG DER BESTÄNDIGKEIT GEGENÜBER SCHIMMELPILZEN UND/ODER VERRINGERUNG DER WASSERAUFNAHME SOWIE EIN MATERIAL AUFWEISEND DIESE ZUSAMMENSETZUNG**
COMPOSITION AND METHOD FOR IMPROVING RESISTANCE TO MILDEW AND / OR REDUCING WATER UPTAKE AND A MATERIAL COMPRISING SAID COMPOSITION
COMPOSITION ET PROCÉDÉ D'AMÉLIORATION DE LA RÉSISTANCE AUX MOISISSURES ET / OU DE RÉDUCTION DE L'ABSORPTION D'EAU AINSI QUE MATÉRIAU COMPORTANT LADITE COMPOSITION

(30) Priorität: 18.10.2018 DE 102018125851
(43) Veröffentlichungstag der Anmeldung: 22.04.2020
(73) Patentinhaber: Technische Universität Dresden, 01069 Dresden (DE)
(72) Erfinder: Delenk, Hubertus, 01307 Dresden (DE); Unbehaun, Holger, 01307 Dresden (DE); Wagenführ, André, 01307 Dresden (DE); Stange, Stephanie, 01307 Dresden (DE)
(74) Vertreter: Kailuweit & Uhlemann Patentanwälte Partnerschaft mbB

(56) Entgegenhaltungen:
- DE-A1-102012 204 238
- FRANZISKA M. PORSCHE ET AL: "Antifungal Activity of Saponins from the Fruit Pericarp of Sapindus mukorossi against Venturia inaequalis and Botrytis cinerea", PLANT DISEASE, Bd. 102, Nr. 5, 1. Mai 2018 (2018-05-01), Seiten 991-1000, XP055658378, US ISSN: 0191-2917, DOI: 10.1094/PDIS-06-17-0906-RE
- FABRICIO BISOGNO ET AL: "Structure-Antifungal Activity Relationship of Cinnamic Acid Derivatives", JOURNAL OF AGRICULTURAL AND FOOD CHEMISTRY, Bd. 55, Nr. 26, 1. Dezember 2007 (2007-12-01), Seiten 10635-10640, XP055290960, US ISSN: 0021-8561, DOI: 10.1021/jf0729098
- Jana Egger: "Haute Ecole d'Arts Appliqués ARC La Chaux-de-Fonds Studiengang Konservierung-Restaurierung Vertiefungsrichtung Archäologische und Ethnographische Objekte Möglichkeiten des Einsatzes von ätherischen Ölen gegen Pilzwachstum auf Trockenholzobjekten", , 1. Januar 2006 (2006-01-01), XP055658825, Gefunden im Internet: URL:https://core.ac.uk/download/pdf/794267 69.pdf [gefunden am 2020-01-16]

## Beschreibung

Mit dieser Erfindung werden der Befall und der Bewuchs von Materialien mit Schimmelpilzen verhindert. Diese Erfindung betrifft eine Zusammensetzung aus Naturstoffen, wie sekundären Pflanzeninhaltsstoffen, als Schutzmittel und einer Bor-freien, Phosphat-haltigen Verbindung, die in Kombination zur Beständigkeit gegenüber Schimmelpilzen führt sowie ein Verfahren und die Verwendung zur Verbesserung der Beständigkeit gegenüber Schimmelpilzen und/oder Verringerung der Wasseraufnahme von Materialien.

Das Wachstum von Schimmelpilzen z. B. an Dämmstoffen führt jährlich zu beträchtlichen wirtschaftlichen Schäden. Besonders im Bereich der Dämmung von Gebäuden spielt die Inhibierung des Wachstums von Schimmelpilzen eine wichtige Rolle. In bewohnten oder von vielen Menschen frequentierten Gebäuden kommt es, besonders im Winter, über die Tageszeit schwankend zu erheblichem Eintrag von Feuchtigkeit, die wiederum an kälteren Flächen, wie Hauswänden kondensiert. Dämmstoffe nehmen aber auch Feuchtigkeit aus der sie umgebenden Luft auf.

Voraussetzungen für den Befall und den Bewuchs von Materialien mit Schimmelpilzen sind neben dem Nährstoffangebot, eine ausreichende Feuchtigkeit und geeigneten Temperaturen. Im Allgemeinen ist bekannt, dass eine Verringerung der Feuchtigkeitsaufnahme bei Materialien mit einer Reduzierung des Pilzwachstums einhergeht.

Aufgrund der pathogenen Eigenschaften zahlreicher Pilze für den Menschen gilt es, Pilzwachstum in und an Gebäuden zu vermeiden.

DE 19611825A1 (1996) offenbart biologische Holzschutzmittel aus pflanzlichen Inhaltsstoffen, wie Phenolderivaten mit mindestens fungistatischer Wirkung zur Inhibierung von Schimmelpilzwuchs. In der Patentanmeldung werden verschiedene Kombinationen dieser flüchtigen Phenolderivate mit weniger flüchtigen fungistatischen bzw. fungiziden Phenolderivaten untersucht.

Schon 1985 wurden in EP0152852A2 (1985) Phenol-Derivate/Chinon-Derivate zusammen mit Alkoxysilan-Derivaten als antimikrobielle Mittel für Bauten, Textilien, Nahrungsmittel oder Agrarprodukte eingesetzt. Unter anderem auch die Kombination mit phenolischen Säuren, wie dem Zimtsäurederivat Cumarsäure wird beschrieben.

Delenk et al. (2015) beschreiben Untersuchungen zum Einfluss sekundärer Pflanzenmetabolite (Pflanzeninhaltsstofffe), wie z. B. Phenolsäuren oder Zimtsäure und deren Derivate, ausschließlich auf das Wachstum ausgewählter Schimmelpilze als Screening im Labor. Die antimykotische Aktivität von Terpenen aus Echtem Salbei (*Salvia officinalis* L.) sowie Triazol-, Bor-, Fluor- und Cu-Verbindungen als chemische Holzschutzmittel werden erwähnt.

Der Online-Artikel https://biooekonomie.de/mit-zimtsaeure-gegen-bazillen (van Bergen 2012) hebt den Vorteil der weit verbreiteten Zimtsäure zur Verhinderung von Pilzwachstum gegenüber Formalin oder Parabenen hervor, die vielfach Allergien auslösen und vor allem chemisch synthetisiert werden. In dem Artikel wird die biotechnologische Herstellung von Zimtsäure beschrieben. Auch Bisogno et al. (2007) erwähnt eine Wirksamkeit der Zimtsäure gegen verschiedene Pilze. Der Online-Artikel https://core.ac.uk/download/pdf/79426769.pdf beschreibt die Möglichkeiten des Einsatzes von ätherischen Ölen gegen Pilzwachstum auf Trockenholzobjekten.

Korošec et al. (2013) zeigen die antimykotische Aktivität von Zimtsäurederivaten und untersuchten den Mechanismus der Inhibierung des Schimmelpilzwachstums. Im Rahmen natürlicher Metabolismen von Pflanzen werden dort auch Verbindungen, wie Terpene, Polycosanole und Phenole, wie beispielsweise Eugenol, Isoeugenol und andere genannt. Untersuchungen zur Kombination mit den untersuchten Zimtsäure-Derivaten wurden nicht durchgeführt.

WO 97/39865 beschreibt ein Verfahren zur Behandlung von Holz gegen den Befall durch holzschädigende Pilze mittels einer Mischung aus Fenpropimorph und einer Triazolverbindung, bei der es zu einem synergistisch wirksamen Effekt kommt. Triazolverbindungen sind allerdings häufig toxisch und daher z. B. im Wohnbereich nicht zu bevorzugen. Darüber hinaus bedürfen Lösungen aus diesen Substanzen einer großen Menge organischen Lösungsmittels, dessen Verwendung im Wohnbereich ebenfalls nicht zu empfehlen ist.

Die pharmakologische Wirksamkeit von Terpenen, vor allem in der Therapie von Krebs, wird in der Pharmazeutischen Zeitung (Jäger, Scheffler und Schmellenkamp 2006) zusammengefasst. Aktivität von Terpenen gegen Bakterien, Pilze, Viren und Protozoen wird offenbart.

Bahrami et al. (2016) veröffentlichen im Journal Marine Drugs Arbeiten zu Seegurken und deren pharmazeutisch aktiven sekundären Metaboliten. Das sind die acetylierten glykosylierten Triterpene (acetylierte Saponine), die u. a. antimikrobielle Wirksamkeit besitzen. Der Effekt der Acetoxygruppe auf die Aktivität der acetylierten Triterpen-Glykoside wird untersucht. Es handelt sich bei diesen Verbindungen um amphiphile Verbindungen, d. h. sie besitzen einen hydrophilen, wasserlöslichen Teil (Glykosid, d. h. Zuckerbestandteil) sowie einen hydrophoben Teil (Triterpen). Bahrami et al. schreiben, dass die biologische Aktivität der Saponine auch maßgeblich von der Struktur der Glykane (Vielfachzucker) abhängig ist. Ein Rückschluss auf Triterpene als Obergruppe schlägt fehl.

Für den Obstbau untersuchten Porsche et al. (2018) sekundäre Pflanzenmetaboliten und deren antioxidative und fungizide Eigenschaften. Es wird darauf hingewiesen, dass die Verbindungen besser biologisch abbaubar sind.

Das fhocus Forschumgsmagazin der FH Münster (N. N. 2005) befasst sich mit der antioxidativen Wirkung des pentazyklischen Triterpens Oleanolsäure und der Extraktion aus Salbei, die ohne organische Lösungsmittel aber mit Hilfe von Tensiden erfolgen kann. Chemisch ist Oleanolsäure nicht synthetisierbar.

Die Ernährungs Umschau (Schmandke 2009) beschreibt die drei häufigsten Verbindungen der Klasse pentazyklische Triterpene/Triterpenoide in Oliven: Erythrodiol, Oleanolsäure und Maslinsäure. Sie gehören alle drei aufgrund ihres Oleanan-C30-Grundgerüsts zu der Klasse der Oleanane (vgl. chemische Formeln unten). Diesen drei Oleananen wird eine antikanzerogene Wirkung, Apoptoseaktivität und glukosesenkende Wirkung zugeschrieben. Fokus der Publikation ist der Ernährungsbereich.

FI125475B (2015) beschreibt die Hydrophobierung von Oberflächen mit einem nicht-toxischen Extrakt aus Birkenrinde, das Betulin bzw. Betulinol enthält. Es wird lediglich das Hydrophobieren der Oberfläche beschrieben und zwar unter Ersatz der weniger umweltfreundlichen Chemikalien, wie Silicon-basierte Mittel oder synthetische Polymere. Nachteilig ist, dass das Birkenextrakt vorzugsweise mit Ethanol und Methanol erzeugt wird, die leicht entzündlich bzw. im Falle des Methanols auch sehr giftig sind. Des Weiteren sind somit bei der Applizierung der Mischung auf einem zu behandelnden Material strenge Vorschriften zum Brand- und Explosionsschutz einzuhalten.

Roffael et al. (2005) offenbaren die Hydrophobierung von mitteldichten Faserplatten (MDF) mit Paraffinen (Mischung acyclischer Alkane) und Emulgatoren sowie die damit einhergehende Minderung der Quellung im Wasser sowie der Wasseraufnahme. Nachteilig ist, dass Paraffine aus endlichen fossilen Rohstoffen, wie Mineralöl oder Braunkohle gewonnen werden. Synthetische Paraffine werden in einem energieaufwendigen Produktionsprozess hergestellt.

Bor-basierte Flammschutzmittel sind bekannt und weit verbreitet. Borsäure-Salze beispielsweise tragen selbst zur Schimmelpilzbeständigkeit der behandelten Materialien bei und sind übliche aber toxische Bestandteile von Flammschutzmitteln. Aufgrund der Giftigkeit dieser BorVerbindungen besteht Bedarf an umweltfreundlichen und gesundheitlich unbedenklichen Flammschutzmitteln. Da Bor-freie Flammschutzmittel aber in der Regel keine fungizide Wirksamkeit besitzen, besteht ein hoher Bedarf an neuen, Bor-freien Zusammensetzungen zur flammschützenden und gleichzeitig pilzschützenden Behandlung von Materialien.

DE10 2012 204 238A1 beschreibt wasserlösliche Flammschutzmittel auf Basis von stickstoff- und phosphorhaltigen Polysacchariden, die im Brandfall zur Dehydratation des Holzes führen. Sie allein sind allerdings nicht gegen den Befall und den Bewuchs durch Schimmelpilze wirksam.

In WO 2012/171662 A1 wird ein Wärmedämmstoff aus Altpapier enthaltend eine Flammschutzmittelzusammensetzung beschrieben, die mindestens zwei Bor-freie Flammschutzmittelsubstanzen und mindestens ein Biozid aus der Gruppe der Silbersalze enthält. Die Hauptkomponenten aller vorgestellten Flammschutzmittel sind Ammonium-Verbindungen. Nachteilig ist, dass ab 14. Juli 2018 Anorganische Ammoniumsalze weder in Zellstoffisoliermaterialgemischen noch in Zellstoffisoliermaterialerzeugnissen in Verkehr gebracht oder verwendet werden dürfen, es sei denn, die Emission von Ammoniak aus diesen Gemischen oder Erzeugnissen führt zu einer Volumenkonzentration von weniger als 3 ppm (2,12 mg/m³). Weiterhin nachteilig ist, dass Silbersalze, wie z. B. Silberbenzoat in die Wassergefährdungsklasse 3 "stark wassergefährdend", genau wie z. B. Ottokraftstoffe eingestuft werden.

Aufgabe der Erfindung ist die Bereitstellung einer Zusammensetzung zur Verbesserung der Beständigkeit von Materialien gegenüber Schimmelpilzen. Insbesondere Zellulosedämmstoffe sollen damit geschützt werden können. Sie sollte auch zur Verringerung der Wasseraufnahme der Materialien beitragen. Gleichzeitig soll eine flammschützende Wirkung erzielt werden. Vorzugsweise soll die Zusammensetzung ökologisch verträglich und gesundheitlich unbedenklich sein. Insbesondere soll sie preiswert sein. Es soll das Wachstum von Schimmelpilzen verhindert werden. Das Applizieren auf einem zu behandelnden Material soll einfach möglich sein, zu einer homogenen Verteilung und zu wenig Verlusten an der Zusammensetzung führen.

Gegenstand der Erfindung ist eine Zusammensetzung zur Verbesserung der Beständigkeit gegenüber Schimmelpilzen, enthaltend:
(a) ein pentazyklisches Triterpen oder pentazyklisches Triterpen-Saponin,
(b) ein Carbonsäure-substituiertes Styrolderivat und
(c) eine Phosphat-haltige Verbindung.

Die Einzelkomponenten der erfindungsgemäßen Zusammensetzung können, unabhängig voneinander, auch in Form eines entsprechenden Salzes oder Hydrates vorliegen, beispielsweise als Chloridsalz der basischen Verbindungen oder als Alkalisalz der sauren Verbindungen.

Die Formulierung "ein" oder "eine" steht hier in der Bedeutung von "mindestens ein" bzw. "mindestens eine" und ist nicht als Beschränkung auf genau 1 zu verstehen. Gleiches gilt für alle nachfolgenden Ausführungen.

Verbesserung der Beständigkeit gegenüber Schimmelpilzen im Sinne der Erfindung bedeutet das Verhindern der Vermehrung der Schimmelpilze auf und im Material und das Hemmen des Schimmelpilzwachstums (d. h. es umfasst inhibierende, vermehrungshemmende, fungistatische und fungizide Wirksamkeit) und wird mit dem Begriff fungistatisch gleichgesetzt. Schimmelpilze umfassen derzeit über 100.000 verschiedene Arten aus den Abteilungen Ascomyceten (Schlauchpilze), Zygomyceten (Jochpilze) und Deuteromyceten (Fungi imperfecti).

Triterpene sind eine Untergrupppe der Terpene, einer stark heterogenen und sehr großen Gruppe chemischer Verbindungen, die als sekundäre Inhaltsstoffe in Organismen natürlich vorkommen. Die Unterscheidung zwischen Triterpenen und Triterpenoiden erfolgt oft unregelmäßig, missverständlich und unterschiedlich. Aus diesem Grunde sind mit der Erfindung die Triterpenoide, ausgenommen die Steroide, mit unter dem Begriff der Triterpene umfasst. Triterpene sind aus sechs Isopren-Einheiten aufgebaute Verbindungen mit insgesamt 30 Kohlenstoffatomen.

Acyclische Triterpene sind in der Natur relativ selten. Vor allem tetracyclische und pentacyclische Triterpene sind in der Natur verbreitet. Tetra- bzw. pentazyklische Triterpene weisen 4 bzw. 5 Ringe in der chemischen Struktur auf. Tetrazyklische Triterpene sind beispielsweise die Dammarane und die Euphane.

Beispiele für pentazyklische Triterpene sind die Gruppen Lupane, Ursane oder Oleanane, oder als Einzelverbindungen beispielsweise die zu den Oleananen gehörende Oleanolsäure (Vorkommen u. a. in Nelken, Oliven, Mistel, Salbei, Efeu), die zu den Ursanen gehörende Ursolsäure (Vorkommen u. a. in Äpfeln, Birnen, Thymian, Basilikum), die zu den Lupanen gehörenden zwei Substanzen Betulin (Vorkommen u. a. in Birken) und Betulinsäure (Vorkommen u. a. Birken, Platanen und Misteln), das Nepehinol, das Lupeol oder die α- und β-Boswelliasäure (Vorkommen u. a. in Weihrauchbäumen). Der Gruppenbegriff der pentazyklischen Triterpensäuren fällt folglich unter den Oberbegriff pentazyklische Triterpene.

Triterpen-Saponine sind die Glycoside, d. h. die glykosylierten Komplementäre der Triterpene. Der Name Saponin ist das lateinische Wort für Seife. Saponine sind seifenartig, d. h. sie verhalten sich ähnlich den Tensiden und bilden oft stabile Schäume beim Schütteln mit Wasser.

Die Aglycone der Saponine, d. h. die nicht-glykosylierten Komplementäre, werden Sapogenine genannt.

Oleanane sind eine Gruppe von Verbindungen, die auf dem C30-Grundgerüst des natürlich vorkommenden pentazyklischen Triterpens Oleanan beruhen. Beispielhafte Vertreter sind das Erythrodiol, die Oleanolsäure oder die Maslinsäure. Die Doppelbindung an einem der Cyclohexanringe spielt für die Gruppenzugehörigkeit keine Rolle. Es sind vielmehr das C30-Grundgerüst und die Position sowie Art der Substituenten, welche die Verbindungen als Oleanane klassifizieren.

Die folgenden chemischen Strukturen zeigen den Grundbaustein Isopren sowie einige Vertreter der Triterpene:

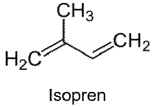

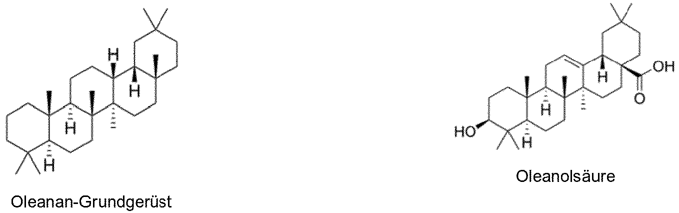

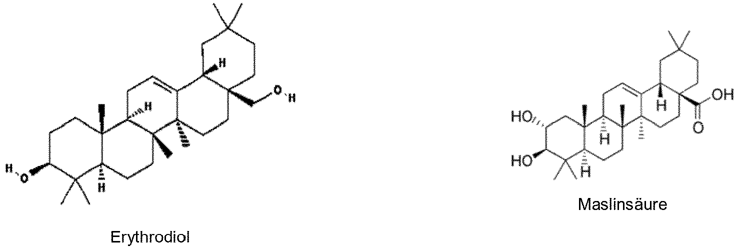

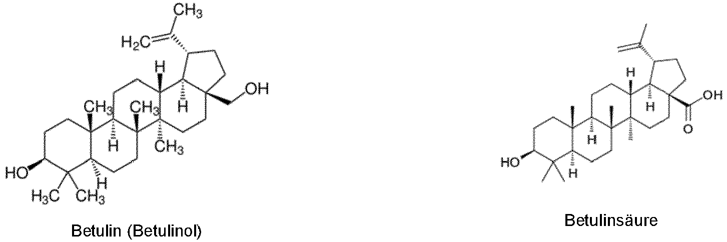

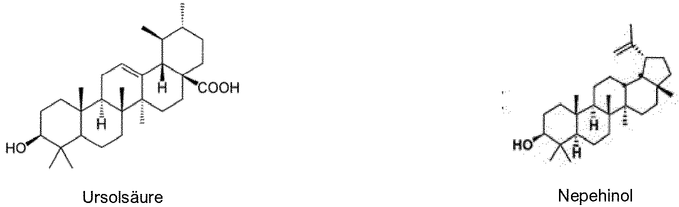

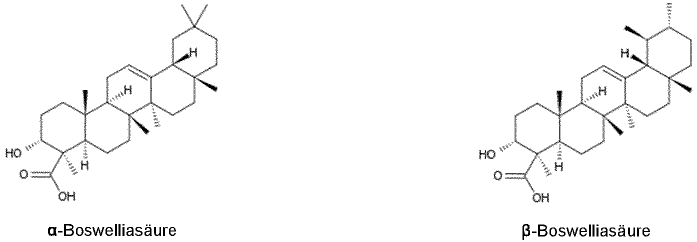

Vorteil der erfindungsgemäßen Zusammensetzung ist, dass Sie zur Verbesserung der Beständigkeit gegenüber Schimmelpilzen, insbesondere auch zur Verringerung der Wasseraufnahme von damit behandeltem Material führt.

Ist die phosphathaltige Verbindung (c) ein phosphathaltiges Flammschutzmittel, so werden vorteilhaft fungistatische mit flammschützender Wirksamkeit vereint.

Vorteilhaft ist auch, dass die oben genannten Komponenten pentazyklisches Triterpen (oder pentazyklisches

Triterpen-Saponin) (a) und Carbonsäure-substituiertes Styrolderivat (b) der erfindungsgemäßen Zusammensetzung Naturstoffe, wie sekundäre Pflanzeninhaltsstoffe sind und vorzugsweise biotechnologischen Herstellprozessen entstammen. Es handelt sich folglich um ökologische und nachhaltig produzierte Komponenten.

Des Weiteren ist vorteilhaft, dass die erfindungsgemäße Zusammensetzung frei von toxischen Bor-basierten Flammschutzmitteln ist aber die damit zusammenhängende fehlende fungistatische Wirksamkeit positiv kompensiert.

In diesem Zusammenhang ist auch vorteilhaft, dass mit der erfindungsgemäßen, Bor-freien Zusammensetzung die zurzeit gültigen Anforderungen für eine Zulassung als Zellulosedämmstoff erfüllt werden.

Ein weiterer Vorteil ist, dass bei Verwendung der erfindungsgemäßen Zusammensetzung (beispielsweise als Schutzmittel von Zellulosedämmstoffen mit Bor-freiem Flammschutzmittel) auf den Einsatz von stark wassergefährdenden Silbersalzen als Biozid verzichtet werden kann.

Vorteilhaft führt die erfindungsgemäße Zusammensetzung auch zu einer Reduzierung der Wasseraufnahme des mit dieser Zusammensetzung behandelten Materials. Bekanntermaßen ist die Reduzierung der inhärenten Feuchtigkeit oder der Oberflächenfeuchtigkeit mit einer Verhinderung des Befalls und des Bewuchses oder mindestens mit einer Verschlechterung der Wachstumsbedingungen von Schimmelpilzen verbunden und führt folglich zu einer Reduzierung von Befall und Bewuchs durch Schimmelpilze.

Materialien aus nachwachsenden Rohstoffen tendieren aufgrund ihrer zellulären (wie z. B. im Falle von Holz) oder ihrer faserigen Struktur (wie z. B. im Falle von Papier) besonders dazu, Feuchtigkeit aufzunehmen. Die Wirkung der Reduzierung der Wasseraufnahme durch Behandlung von z B. Fasern oder Oberflächen kommt bei solchen Materialien besonders stark zum Tragen.

Vorteilhaft ersetzt das erfindungsgemäße pentazyklische Triterpen oder pentazyklische Triterpen-Saponin die sonst beispielsweise bei Holz-dämmstoffen üblichen Hydrophobierungsmittel, wie z. B. Paraffine, die mit vielen Nachteilen verbunden sind. Paraffine lassen sich lediglich aus fossilen Rohstoffen, wie Mineralöl oder Braunkohle herstellen. Fossile Rohstoffe sind endlich. Deren Förderung und Verarbeitung belastet die Umwelt. Die Ölabtrennungsverfahren zur Herstellung von Rohparaffin aus Erdöl oder das Fischer-Tropsch-Verfahren zur Herstellung synthetischer Paraffine aus z. B. Braunkohle sind sehr energieaufwändig.

Ein weiterer Vorteil der Erfindung ist, dass die bei Dämmmaterialien erforderliche niedrige Wärmeleitfähigkeit durch Behandlung eines Materials mit der erfindungsgemäßen Zusammensetzung nicht negativ beeinflusst wird, d. h.dass die Wärmeleitfähigkeit nicht erhöht wird, was zu einer schlechteren Dämmleistung führen würde.

Auch das Brand- und Setzungsverhalten, beispielsweise bei Einblasdämmstoffen, bleiben unverändert.

Bevorzugt ist das pentazyklische Triterpen oder pentazyklische Triterpen-Saponin eine pentazyklische Triterpensäure.

In einer bevorzugten Ausführungsform ist es ein Oleanan, besonders bevorzugt Oleanolsäure, insbesondere Oleanolsäure-Hydrat.

In einer Ausführungsform ist das Carbonsäure-substituierte Styrolderivat ein substituiertes Phenyl-Acrylsäure-Derivat. Bevorzugt ist sie ein Zimtsäure-Derivat oder ein Salz oder Ester davon. Dabei ist sowohl das *trans-* als auch das *cis*-Zimtsäure-Derivat umfasst. Besonders bevorzugt ist sie Zimtsäure, insbesondere die häufiger vorkommende *trans*-Zimtsäure. Substituiert im Sinne der Erfindung bedeutet der Austausch von vorzugsweise ein bis drei Wasserstoffatomen gegen Hydroxy-, Hydroxyalkyl-, Carbonyl-, Carbamoyl-, Acetyl-, Alkyl-, Alkenyl-, Alkinyl-, Vinyl- bzw. Allyl-Gruppen. Beim Austausch mehrerer Wasserstoffe können die Positionen unterschiedlich substituiert sein. Alkyl-, Alkenyl- bzw. Alkinyl-Gruppen im Sinne der Erfindung bedeutet vorzugsweise substituierte oder unsubstituierte C1- bis C5-Ketten.

Die Substanzen (a) und (b) der erfindungsgemäßen Zusammensetzung können sowohl als aus der Natur isolierte Substanzen oder als synthetisierte Reinsubstanzen vorliegen.

Die Phosphat-haltige Verbindung (c) der erfindungsgemäßen Zusammensetzung ist in einer Ausführungsform ausgewählt aus Salzen und Estern der Orthophosphorsäure (H₃PO₄) und der Diphosphorsäure (H₄P₂O₇) und aus Mischungen verschiedener davon, besonders bevorzugt sind es Salze und Ester der Orthophosphorsäure, insbesondere Salze davon, wie beispielsweise Ammoniumphosphat.

In einer anderen Ausführungsform ist die Phosphat-haltige Verbindung ein Salz, wobei das Anion verschieden ist von Ammonium, so dass es vorteilhaft bei der Herstellung, der Verarbeitung und bei der Anwendung, z. B. in Zellulosedämmstoffen zu keiner Entwicklung giftigen Ammoniaks kommt.

In einer ebenfalls bevorzugten Ausführungsform ist die Phosphat-haltige Verbindung ein Phosphat-haltiges Flammschutzmittel. Das Phosphat-haltige Flammschutzmittel ist insbesondere ein organisches Flammschutzmittel mit Phosphat, bevorzugt ein Phosphat-modifizierter Naturstoff, besonders bevorzugt ein Phosphat-modifiziertes Polysaccharid, wie z. B. Stärke oder Zellulose.

In einer Variante der vorigen Ausführungsform liegt das Phosphat-haltige Flammschutzmittel zusammen mit Erdalkalisalzen starker Säuren vor.

In einer Ausführungsform der erfindungsgemäßen Zusammensetzung liegt das Gewichtsverhältnis der Inhaltsstoffe (a) : (b) : (c) im Bereich (0,5 - 2) : (0,5 - 2) : (5 - 15), bevorzugt (1 ± 0,3) : (1 ± 0,3) : (10 ± 3), besonders bevorzugt (1 ± 0,2) : (1 ± 0,2) : (10 ± 2), insbesondere 1 : 1 : 10. Dieses Gewichtsverhältnis bedeutet das Verhältnis der Massen der Inhaltsstoffe in der Zusammensetzung.

In einer bevorzugten Ausführungsform ist die erfindungsgemäße Zusammensetzung eine flüssige Formulierung.

Eine besonders bevorzugte Ausführungsform der erfindungsgemäßen Zusammensetzung besteht darin, dass die Zusammensetzung in Form einer Dispersion, Suspension, Emulsion oder Lösung vorliegt, d. h. als eine solche Formulierung, insbesondere als wasserbasierte Suspension, wasserbasierte Emulsion oder wasserbasierte Lösung, besonders bevorzugt als wasserbasierte Suspension oder wasserbasierte Lösung.

Je nachdem ob beispielsweise eine flüssige Komponente oder deren oftmals festes Salz oder Hydrat vorliegt und abhängig davon, ob sich die Komponente in der anderen Komponente oder dem Lösungsmittel löst, kann die Zusammensetzung schließlich als Dispersion, Suspension, Emulsion oder Lösung formuliert werden.

Dispersion ist ein Oberbegriff für heterogene Gemische (nicht Lösungen oder Verbindungen), wobei die Teilchen des einen Stoffes fein verteilt in dem anderen Stoff vorliegen. Eine Suspension beschreibt dies etwas genauer (fest-flüssig), wobei ein fester Stoff fein verteilt in einem flüssigen vorliegt. Der dritte Fall ist die Emulsion (auch eine Dispersion) für heterogene flüssig-flüssig Systeme, wie beispielsweise Milch oder Mayonnaise, bei denen ein flüssiger Stoff fein verteilt in einem anderen flüssigen Stoff vorliegt und sich schlecht bis gar nicht in diesem löst. Bei Emulsionen findet keine Entmischung statt, da diese meist durch Emulgatoren stabilisiert sind.

Wasserbasiert umfasst hierbei mehrere Abstufungen, wie beispielsweise mit Wasser in jedem Verhältnis verdünnbar, wasserlöslich, frei von organischen Lösungsmitteln, wässrig. Wasserbasiert setzt nicht zwangsläufig das Nichtvorhandensein organischer Lösungsmittel voraus. Von wasserbasiert spricht man, wenn der Anteil organischen Lösungsmittels zu einem großen Teil durch Wasser ersetzt wurde.

Bei der Reduzierung der Anteile organischer Lösungsmittel, oder im besten Fall bei vollständigem Verzicht auf diese, minimieren sich vorteilhaft die Gefahren von Brand oder Explosion. Der Aufwand für Maßnahmen zum Brand- und Explosionsschutz kann reduziert werden.

Vorteilhaft an diesen beiden letztgenannten Ausführungsformen ist, dass es bei diesen flüssigen Zusammensetzungen möglich ist, das zu behandelnde Material zu besprühen, was wiederum zu einer besseren Anhaftung am Material führt im Vergleich zum Mischen mit einer trockenen Zusammensetzung. Bei Applizierung der Zusammensetzung in flüssiger Form, wie beispielsweise als Dispersion oder Lösung, treten des Weiteren weniger Verluste auf als wenn eine feste Zusammensetzung appliziert wird. Die Gefahr der Überdosierung ist ebenfalls geringer. Die Zusammensetzung ist zudem homogener im bzw. auf dem Material verteilt. Ebenfalls erlaubt die flüssige Zusammensetzung dieser Ausführungsform, beispielsweise bei Applizierung an Faserstoffe aus nachwachsenden Rohstoffen als zu behandelndes Material, das Herstellen staubarmer Einblasdämmstoffe.

Die erfindungsgemäße Zusammensetzung, insbesondere in Form einer Formulierung als Dispersion, Suspension, Emulsion oder Lösung, enthält bei Bedarf zusätzlich Zusatzstoffe, wie z. B. Bindemittel (beispielsweise Alkydharze oder Acrylatdispersionen) oder auch anorganische oder organische Pigmentzubereitungen oder andere Hilfsmittel, wie Trocken-, Netz- oder Penetrationshilfsmittel.

Die Konzentration der erfindungsgemäßen Inhaltsstoffe der Zusammensetzung richtet sich meist nach dem Grad der Gefährdung des zu behandelnden Materials durch Schimmelpilze. Vorzugsweise wird die Zusammensetzung im Falle einer flüssigen Formulierung hochkonzentriert eingesetzt, um so wenig wie möglich flüssige Phase oder Lösungsmittel auf das zu behandelnde Material zu applizieren. Das Verhältnis der Komponenten der erfindungsgemäßen Zusammensetzung ist allerdings bevorzugt wie in einer oben beschriebenen Ausführungsform festgelegt.

In einer Ausführungsform der Erfindung sind die Schimmelpilze ausgewählt aus *Aspergillus niger* DSM 1957, *Chaetomium globosum* DSM 1962, *Penicillium pinophilum* DSM 1960, *Paecilomyces variotii* DSM 1961, *Trichoderma virens* DSM 1963 und einer Mischung dieser. Besonders sind sie eine Mischkultur.

Gegenstand der Erfindung ist auch ein **Material** aufweisend die oben aufgeführte erfindungsgemäße Zusammensetzung.

Umfasst ist auch ein Material, in welchem nur ein oder zwei der Einzelkomponenten der Zusammensetzung aufgetragen worden sind und somit die Zusammensetzung erst im bzw. auf dem Material entsteht.

Das erfindungsgemäße Material ist in einer Ausführungsform ausgewählt aus nachwachsenden Rohstoffen, insbesondere aus Holzwerkstoffen und Dämmstoffen.

Materialien aus nachwachsenden Rohstoffen sind beispielsweise Holz, Holzwerkstoffe, Holzpartikel, wie z. B. Späne oder Fasern, Zellstoffe oder auch andere Zellulose enthaltende Materialien, die einem Befall und Bewuchs durch Schimmelpilze zugänglich sind. Das sind z. B. Zwischenprodukte bei der Papierherstellung und Papier oder Pappe sowie daraus hergestellte Produkte, Einjahrespflanzen, wie z. B. Flachs, Hanf, Jute, Stroh, Bagasse, Raps, Gräser, wie Wiesengras oder Bambus sowie Seegras.

Bevorzugt ist das Material ausgewählt aus Holz- und Zellulosefaserstoffen sowie daraus hergestellten Dämmstoffen. Insbesondere ist es ein Einblasdämmstoff auf Basis von Holz und/oder Papier, d. h. zum Beispiel ein Einblasdämmstoff auf Basis von Altpapier (gehört zur Gruppe der Zellulosedämmstoffe). Besonders bevorzugt ist das Material ein Zellulose-Einblasdämmstoff.

Vorteilhaft resultieren bei der Ausführungsform der erfindungsgemäßen Zusammensetzung mit einem Phosphat-modifizierten Naturstoff als Phosphat-haltige Verbindung, den man biopolymerbasiertes Flammschutzmittel nennt und der ökologisch wesentlich verträglicher als übliche Flammschutzmittel wie Borsalze ist, vorzugsweise angewendet im erfindungsgemäßen Verfahren auf solch einem Material aus nachwachsenden Rohstoffen, überaus zukunftsfähige Materialien mit komplett biobasierten Additiven.

In einer Ausführungsform des erfindungsgemäßen Materials weist es die folgenden voneinander unabhängigen Mengen der Einzelkomponenten der Zusammensetzung auf (als Gewichts-% (Gew.-%), bezogen auf die Trockenmasse des Materials vor der Behandlung):
(a) pentazyklisches Triterpen oder pentazyklisches Triterpen-Saponin: 0,5 Gew.-% - 2 Gew.-% und/oder
(b) Carbonsäure-substituiertes Styrolderivat: 0,5 Gew.-% - 2 Gew.-% und/oder
(c) Phosphat-haltige Verbindung: 5 Gew.-% - 15 Gew.-%.

Bevorzugt sind es die Mengen:
(a) pentazyklisches Triterpen oder pentazyklisches Triterpen-Saponin: 1 Gew.-% und/oder
(b) Carbonsäure-substituiertes Styrolderivat: 1 Gew.-% und/oder
(c) Phosphat-haltige Verbindung: 10 Gew.-%.

Trockenmasse des Materials (vor der Behandlung) bedeutet, dass zur genauen Mengenberechnung ein Teil des zu behandelnden Materials getrocknet wird, geschreddertes oder zerfasertes Zeitungspapier beispielsweise bei 70 °C ± 2 °C oder Holzfasern bei 103°C ± 2 °C und anschließend die Masse des trockenen Materials bestimmt wird und als Referenz für die Berechnung der aufzubringenden Einzelkomponenten herangezogen wird.

Gegenstand der Erfindung ist auch die Verwendung der erfindungsgemäßen Zusammensetzung als Schutzmittel zur Verbesserung der Beständigkeit gegenüber Schimmelpilzen und/oder zur Verringerung der Wasseraufnahme von Materialien, insbesondere die Verwendung im erfindungsgemäßen Verfahren. Im Sinne der Erfindung ist dabei die Verwendung im sowie auf dem Material, wie beispielsweise beim Behandeln des Materials durch Aufsprühen der Zusammensetzung auf das Material, mit umfasst.

Gegenstand der Erfindung ist auch ein Verfahren zur Verbesserung der Beständigkeit eines Materials gegenüber Schimmelpilzen und/oder zur Verringerung der Wasseraufnahme mit dem Schritt:
- Aufbringen der Zusammensetzung oder schrittweises Aufbringen der in der Zusammensetzung enthaltenen Einzelkomponenten auf das zu behandelnde Material.

Das Verfahren kann mit weiteren Schritten kombiniert werden.

Der Schritt "Aufbringen der Zusammensetzung oder schrittweises Aufbringen der in der Zusammensetzung enthaltenden Einzelkomponenten" erfolgt, indem man entweder die fertig gemischte erfindungsgemäße Zusammensetzung aufbringt oder indem man sequentiell, d. h. nacheinander, oder gleichzeitig die Einzelkomponenten der erfindungsgemäßen Zusammensetzung aufbringt. Die Reihenfolge spielt dabei keine Rolle. Bei der sequentiellen Art des Aufbringens ist es auch möglich, dass mehrere Einzelkomponenten in einem Schritt gleichzeitig aufgebracht werden, andere Einzelkomponenten wiederum separat aufgebracht werden. Nach Beendigung dieses Schrittes des erfindungsgemäßen Verfahrens weist das Material die erfindungsgemäße Zusammensetzung auf.

Das o. a. "Aufbringen der Zusammensetzung..." im erfindungsgemäßen Verfahren umfasst zum einen auch das Trockenmischen mit dem zu behandelnden Material, d. h. das Mischen, wobei mindestens einer der Einzelkomponenten als Feststoff mit dem zu behandelnden Material gemischt wird. Zum anderen umfasst ist auch das Trockenapplizieren. Dabei erfolgt das erfindungsgemäße "Aufbringen der Zusammensetzung ..." beispielsweise bei einem Mahl- bzw. Zerfaserungsprozess des zu behandelnden Materials.

Wenn die Einzelkomponenten trocken aufgebracht werden, d. h. ohne flüssige Phase oder Lösungsmittel, ist folglich vorteilhafterweise keine Trocknung des behandelten Materials erforderlich.

Das Material ist in einer Ausführungsform des erfindungsgemäßen Verfahrens wie weiter oben beschrieben ausgewählt.

In einer Ausführungsform wird zuerst eine Mischung aus pentazyklischem Triterpen der pentazyklischem Triterpen-Saponin und Carbonsäure-substituiertem Styrolderivat hergestellt und auf das Material aufgebracht, bevorzugt durch Sprühen der beiden Komponenten in wasserbasierter Suspension in Wasser und Ethanol und anschließend wird das Material mit der Phosphat-haltigen Verbindung in Kontakt gebracht. Bevorzugt findet dieses Kontaktieren mit einer festen Phoshat-haltigen Verbindung in einer Wirbelstrommühle statt.

In einer Ausführungsform des Verfahrens erfolgt der erfindungsgemäße Schritt "Aufbringen der Zusammensetzung..." durch Besprühen, Tauchen oder Tränken mit bzw. in der erfindungsgemäßen Zusammensetzung in Form einer flüssigen Formulierung. Dieser, auch Flüssigapplizierung genannter Schritt wird im Bedarfsfall beliebig oft wiederholt, mit oder ohne zwischengeschaltetem Trocknungsschritt.

In einer weiteren Ausführung erfolgt das o.a. "Aufbringen der Zusammensetzung..." im erfindungsgemäßen Verfahren derart, dass ein oder mehrere der Einzelkomponenten der Zusammensetzung als Feststoff auf einem festen Träger anhaftend vorliegen und mit dem festen Material gemischt werden. Übliche Träger sind u. a. Schaum, Talkum, Gips, Calciumcarbonat, Kaolin, anorganische oder organische Pulver, Baumwolle.

Auch diese beiden letztgenannten Ausführungsformen können miteinander kombiniert werden, so dass einzelne Komponenten flüssig und andere als Feststoff "aufgebracht" werden.

Vorteilhaft ist auch die Ausführungsform, in der die Behandlung mit einer flüssigen Formulierung der erfindungsgemäßen Zusammensetzung oder zumindest einzelner Komponenten in flüssiger Formulierung erfolgt. Dadurch treten weniger Verluste (der erfindungsgemäßen Zusammensetzung) auf und die Gefahr einer Überdosierung bzw. die Gefahr einer nicht homogenen Verteilung der Zusammensetzung bzw. der flüssig aufgebrachten Einzelkomponenten ist geringer. Zudem ist das Anhaften am Material besser als bei der trockenen Applizierung.

In einer Ausführungsform des erfindungsgemäßen Verfahrens werden folgende Mengen der Einzelkomponenten der Zusammensetzung aufgebracht (als Gew.-%, bezogen auf die Trockenmasse des zu behandelnden Materials):
(a) pentazyklisches Triterpen oder pentazyklisches Triterpen-Saponin: 0,5 Gew.-% - 2 Gew.-%,
(b) Carbonsäure-substituiertes Styrolderivat: 0,5 Gew.-% - 2 Gew.-%,
(c) Phosphat-haltige Verbindung: 5 Gew.-% - 15 Gew.-%.

Bevorzugt sind es die Mengen:
(a) 1 Gew.-% und/oder
(b) 1 Gew.-% und/oder
(c) 10 Gew.-%.

In einer Ausführungsform des erfindungsgemäßen Verfahrens, in der die erfindungsgemäße Zusammensetzung als flüssige Formulierung vorliegt, beinhaltet das Verfahren nach dem Schritt "Aufbringen der Zusammensetzung oder schrittweises Aufbringen der in der Zusammensetzung enthaltenden Einzelkomponenten auf das zu behandelnde Material" einen zusätzlichen Trocknungsschritt, der bei Temperaturen < 100 °C stattfindet, bevorzugt bei 15 °C - 80 °C, ganz bevorzugt bei 40 °C - 60 °C.

Im Trocknungsschritt kommt es (bei flüssig applizierter Zusammensetzung) zum Verdampfen von flüssiger Phase oder Lösungsmitteln. Der Trocknungsschritt kann, je nach Temperatur, über eine Zeit von wenigen Sekunden (1 s) bis zu mehreren Stunden (24 h) erfolgen. Dabei verhält sich Temperatur und Zeit entgegengesetzt proportional zueinander, d. h. bei niedriger Temperatur ist die Zeit lang und umgekehrt.

In einer vorteilhaften Ausführungsform wird das Material nach der Applizierung von zumindest Teilen der Zusammensetzung als flüssige Formulierung gleichzeitig gemahlen und getrocknet. D. h. beispielsweise durch Besprühen behandeltes (und damit befeuchtetes) Material kann beim Mahlen mit warmer bzw. heißer Luft getrocknet werden.

Gegenstand der Erfindung ist auch die Verwendung einer Zusammensetzung, enthaltend:
(a) ein pentazyklisches Triterpen oder pentazyklisches Triterpen-Saponin, und
(b) ein Carbonsäure-substituiertes Styrolderivat
als Zusatz zu Phosphat-haltigen Flammschutzmitteln, insbesondere im erfindungsgemäßen Verfahren.

Die Komponenten (a), (b) und das Phosphat-haltige Flammschutzmittel sind in bevorzugten Ausführungsformen und Mengen wie oben, bezüglich der erfindungsgemäßen Zusammensetzung erwähnt, ausgewählt und eingesetzt.

Tabelle 1 zeigt die Übersicht zur Herstellung eines Zellulosedämmstoffs, der mit der erfindungsgemäßen Zusammensetzung behandelt wurde sowie zur Herstellung von zugehörigen Referenz- und Kontrollbeispielen.

Tabelle 2 zeigt die Ergebnisse der Überprüfung der Kurzzeit-Wasseraufnahme eines Zellulosedämmstoffs, der mit der erfindungsgemäßen Zusammensetzung behandelt wurde sowie von zugehörigen Referenz- und Kontrollbeispielen.

Aus Tabelle 2 (Spalte "normierte Kurzzeit-Wasseraufnahme in g nach 24 h") ist zu erkennen, dass das Referenzbeispiel 3 (Ref B), ein Zellulosedämmstoff mit Bor-basiertem Flammschutzmittel (FSM B), am meisten Wasser aufgenommen hat, gefolgt von einem Zellulosedämmstoff mit Phosphat-haltigem FSM (FSM A), dessen Ausgangsmaterial geschreddertes Zeitungspapier (sZP) zur Lösungsmittelkontrolle (LMK) mit dem Lösungsmittel (LM) behandelt wurde: Dem Referenzbeispiel 5 (LMK + FSM A). Am wenigsten Wasser wurde von einem Zellulosedämmstoff mit Oleanolsäure (OS) in Form von OS-Hydrat und dem FSM A aufgenommen, dem Referenzbeispiel 8 (1 % OS + FSM A), gefolgt von einem Zellulosedämmstoff mit OS, Zimtsäure (ZS) in Form der *trans-*ZS und dem FSM A, dem Ausführungsbeispiel 9 (1 % OS + 1 % ZS + FSM A).

Tabelle 3 zeigt eine Auswahl der Ergebnisse aus Tabelle 2 und setzt die normierte Kurzzeit-Wasseraufnahme nach 24 h des Ausführungsbeispiels 9 und des Referenzbeispiels 8 ins Verhältnis zu den Referenzbeispielen 2, 3 und 5.

Aus den Vergleichen in Tabelle 3 ist ersichtlich, dass das Material aus Ausführungsbeispiel 9 (1% OS + 1 % ZS + FSM A) ähnlich gut abschneidet, wie das aus Referenzbeispiel 8 (1 % OS + FSM A). Diese beiden Varianten weisen gegenüber den zum Vergleich heran gezogenen Referenzbeispielen 2 (Ref A), 3 (Ref B) und 5 (LMK + FSM A) in jedem Falle verringerte Wasseraufnahmen auf, was auf eine erfolgreiche Hydrophobierung des Zellulosedämmstoffs mit der Schutzmittelkombination aus OS und ZS zurückzuführen ist.

Tabelle 4 zeigt das Bewertungsschema für die Intensität des Befalls und des Bewuchses durch Schimmelpilze der untersuchten Proben.

Tabelle 5 zeigt die Ergebnisse der Überprüfung der Schimmelpilzbeständigkeit eines Zellulosedämmstoffs, der mit der erfindungsgemäßen Zusammensetzung behandelt wurde, sowie von zugehörigen Referenz- und Kontrollbeispielen.

Aus Tabelle 5 ist zu erkennen, dass das Ausführungsbeispiel 9 und das Referenzbeispiel 3 keinen Schimmelpilzbewuchs auf der Prüfoberfläche (bei Betrachtung im Auflichtmikroskop bei 50-facher Vergrößerung) aufwiesen. Demnach lässt sich das Ausführungsbeispiel 9 als "beständig" klassifizieren und ist hinsichtlich der Schimmelpilzbeständigkeit ohne Einschränkung als Dämmstoff geeignet.

Alle aufgeführten Ausführungsformen können in beliebiger Weise miteinander kombiniert werden.

### Ausführungsbeispiele

Die Erfindung wird verdeutlicht durch die folgenden Ausführungsbeispiele ohne auf diese beschränkt zu sein:

### a) Herstellung einer OS-Suspension

Zur Herstellung einer OS-Suspension wurde OS-Hydrat in Pulverform (Tokyo Chemical Industry Co., Ltd., Lot-Nr: 8OTZD-PL, CAS-Nr: 508-02-1, Reinheit: > 98 %), Ethanol, 96 %, vergällt (E96) und einfach destilliertes Wasser (Ad) verwendet. Es wurden 39,6 g OS in 287 ml E96 suspendiert. Die Suspension wurde mit Ad zu einer wässrigen Suspension mit insg. 550 ml Volumen (Volumenkontraktion) mit einem Ethanolgehalt von 50 % verdünnt.

### b) Herstellung einer OS-ZS-Suspension

Zur Herstellung einer OS-ZS-Suspension wurde die in Beispiel a) beschriebene OS-Suspension sowie eine ZS-Suspension verwendet. Zur Herstellung der ZS-Suspension wurde *trans*-ZS in Pulverform (abcr GmbH, Charge: 1157747, CAS-Nr.: 140-10-3, Reinheit: 99%), E96 und Ad verwendet. Es wurden 39,6 g ZS in 287 ml E96 suspendiert. Die Suspension wurde mit Ad zu einer wässrigen Suspension mit 550 ml Volumen (Volumenkontraktion) mit einem Ethanolgehalt von 50 % verdünnt. Die OS-Suspension aus Beispiel a) und die ZS-Suspension wurden miteinander vereint, sodass sich eine Gesamtkonzentration der beiden Schutzmittel OS und ZS von 72 g/l in der OS-ZS-Suspension ergab.

### c) Applizierung einer OS-ZS-Suspension an sZP

### Ausgangsmaterialien für Ausführungsbeispiel 9 und Kontrollbeispiel 7:

Die OS-ZS-Suspension aus Beispiel a) wurde mit einer Konzentration von insgesamt 2 % (Gew./Gew.) und anteilig 1 % (Gew./Gew.) OS + 1 % (Gew./Gew.) ZS, bezogen auf die trockene Masse von sZP aufgebracht. Zur Ermittlung des Feuchtegehalts (Ausgangsfeuchte) des sZP wurde ein elektronischer Feuchtigkeitsbestimmer (Moisture Analyzer MA 30, Probeneinwaage 1,0 g ± 0,1 g, Trocknungstemperatur 70 °C) verwendet. Die Applizierung der OS-ZS-Suspension erfolgte mit einer Beleimungsmaschine (Drais FSP 80), bestehend aus einem Trommelmischer und einer Sprühvorrichtung mit einer Zweistoffdüse (Düsendurchmesser: 1,8 mm). Dazu wurde 1 kg sZP für 2 min mit Druckluft vorgetrommelt, danach die Suspension (250 ml + 10 Volumen-% (Vol.-%) für Verlustausgleich) mit Druckluft für 2 min aufgesprüht und anschließend für 2 min ohne Druckluft nachgetrommelt. Das behandelte sZP wurde bei 25 °C ± 10 °C bis zu einem Feuchtegehalt ≤ 10 % getrocknet. Der Feuchtegehalt wurde durch regelmäßige Probenahme mit einem elektronischen Feuchtigkeitsbestimmer (Moisture Analyzer MA 30, Probeneinwaage 1,0 g ± 0,1 g, Trocknungstemperatur 70 °C) ermittelt.

### d) Applizierung einer OS-Suspension an sZP

### Ausgangsmaterialien für Referenzbeispiel 8 und Kontrollbeispiel 6:

Die OS-Suspension wurde mit einer Konzentration von 1 % (Gew./Gew.) OS, bezogen auf die trockene Masse von sZP aufgebracht. Das Vorgehen zur Applizierung und Trocknung erfolgte analog, wie in Beispiel c) beschrieben.

### e) Applizierung des LM an sZP

### Ausgangsmaterialien für Referenzbeispiel 5 und Kontrollbeispiel 4:

Das wässrige LM bzw. die flüssige Phase der beiden Suspensionen nach den Beispielen a) und b), 50 %iger Ethanol (E50) wurde in einer Menge von 250 ml + 10 Vol.-% für Verlustausgleich an sZP aufgebracht. Das Vorgehen zur Applizierung und Trocknung erfolgte analog, wie in Beispiel c) beschrieben, mit dem Unterschied, dass im LM bzw. in der flüssigen Phase keinerlei Schutzmittel gelöst bzw. suspendiert waren.

### f) Herstellung von Zellulosedämmstoffen (Ausführungsbeispiel und Referenzen) sowie von Zellulosefaserstoffen (Kontrollen)

Je Beispiel (Beispiele 1 bis 9) wurde 2,5 kg ± 0,5 kg Ausgangsmaterial (behandeltes und getrocknetes bzw. unbehandeltes sZP) mit einer Ausgangsfeuchte von 8,96 % ± 0,4 % in einer Wirbelstrommühle im Trockenverfahren zerfasert. Bei den Zellulosedämmstoffen wurde das Ausgangsmaterial zusammen mit 400 g ± 80 g FSM verarbeitet. Die Dosierung des Ausgangsmaterials bzw. des Ausgangsmaterials und des FSM erfolgte auf einem Förderband. Die Konzentration des FSM A (Mischung aus Ammoniumphosphat (NH₄)₃PO₄ und Erdalkalisalzen starker Säuren) betrug 17,5 Gew-%, die Konzentration des FSM B (Mischung aus Borsäure und Aluminiumhydroxid) betrug 12 Gew.-%., bezogen auf die trockene Masse des jeweiligen Ausgangsmaterials. Zur Ermittlung des Feuchtegehalts (Ausgangsfeuchte) des jeweiligen Ausgangsmaterials wurde ein elektronischer Feuchtigkeitsbestimmer (Moisture Analyzer MA 30, Probeneinwaage 1,0 g ± 0,1 g, Trocknungstemperatur 70 °C) verwendet.

### Ausführungsbeispiel 9:

Der Zellulosedämmstoff wurde aus sZP, welches nach Beispiel c) mit einer OS-ZS-Suspension behandelt wurde sowie mit dem Phosphat-haltigen FSM (Mischung aus Ammoniumphosphat (NH₄)₃PO₄ und Erdalkalisalzen starker Säuren) nach Beispiel f) hergestellt.

### Referenzbeispiel 8:

Der Zellulosedämmstoff wurde aus sZP, welches nach Beispiel d) mit einer OS-Suspension behandelt wurde sowie mit einem Phosphat-haltigen FSM nach Beispiel f) hergestellt.

### Kontrollbeispiel 7:

Der Zellulosefaserstoff wurde aus sZP, welches nach Beispiel c) mit einer OS-ZS-Suspension behandelt wurde, ohne die Zugabe eines FSM nach Beispiel f) hergestellt.

### Kontrollbeispiel 6:

Der Zellulosefaserstoff wurde aus sZP, welches nach Beispiel d) mit einer OS-Suspension behandelt wurde, ohne die Zugabe eines FSM nach Beispiel f) hergestellt.

### Referenzbeispiel 5:

Der Zellulosedämmstoff wurde aus sZP, welches nach Beispiel e) mit dem wässrigen LM bzw. der wässrigen flüssigen Phase E50 behandelt wurde sowie mit einem Phosphat-haltigen FSM nach Beispiel f) hergestellt.

### Kontrollbeispiel 4:

Der Zellulosefaserstoff wurde aus sZP, welches nach Beispiel e) mit dem wässrigen LM bzw. der wässrigen flüssigen Phase E50 behandelt wurde, ohne die Zugabe eines FSM nach Beispiel f) hergestellt.

### Referenzbeispiel 3:

Der Zellulosedämmstoff wurde aus unbehandeltem sZP sowie mit einem Bor-basiertem FSM nach Beispiel f) hergestellt.

### Referenzbeispiel 2:

Der Zellulosedämmstoff wurde aus unbehandeltem sZP sowie mit einem Phosphat-haltigen FSM nach Beispiel f) hergestellt.

### Kontrollbeispiel 1:

Der Zellulosefaserstoff wurde aus unbehandeltem sZP ohne die Zugabe eines FSM nach Beispiel f) hergestellt.

**Tabelle 1: Übersicht zur Herstellung von Zellulosedämmstoffen (Ausführungsbeispiel 9 und Referenzbeispiele 2, 3, 5 und 8) sowie von Zellulosefaserstoffen (Kontrollbeispiele 1, 4, 6 und 7).**

| **Beispiel** | **Nr.** | **Bezeichnung** | **Auftrag von** | | | | **Erzeugnisse** | | |
|---|---|---|---|---|---|---|---|---|---|
| | | | **FSM** | | **LM** | **Suspension** | **Zellulosedämmstoff** | **Zellulosefaserstoff** | **Faseranteil in %** |
| | | | **A** | **B** | | | | | |
| Kontrolle | 1 | 0 | - | - | - | - | - | X | 100,0 |
| Referenz | 2 | RefA | X | - | - | - | X | - | 82,5 |
| Referenz | 3 | RefB | - | X | - | - | X | - | 88,0 |
| Kontrolle | 4 | LMK | - | - | X | - | - | X | 100,0 |
| Referenz | 5 | LMK + FSM A | X | - | X | - | X | - | 82,5 |
| Kontrolle | 6 | OS 1 % | - | - | - | X | - | X | 99,0 |
| Kontrolle | 7 | OS 1 % + ZS1 % | - | - | - | X | - | X | 98,0 |
| Referenz | 8 | OS 1 % + FSM A | X | - | - | X | X | - | 81,5 |
| Ausführungsbeispiel | 9 | OS 1 % + ZS1 % + FSM A | X | - | - | X | X | - | 80,5 |

| | | | | | | | | | |
|---|---|---|---|---|---|---|---|---|---|
| Legende: FSM=Flammschutzmittel; FSM A=Phoshat-haltig ((NH₄)₃PO₄/ Erdalkalisalz starker Säuren); FSM B=Bor-basiert (B(OH)₃/Al(OH)₃); LM=Lösungsmittel Ethanol (50 %); Suspension=Schutzmittel + LM; 0=Nullprobe; Ref A=Zellulosedämmstoff mit Flammschutzmittel A; Ref B=Zellulosedämmstoff mit Flammschutzmittel B; LMK=Lösungsmittelkontrolle; OS=Oleanolsäure; ZS=Zimtsäure; x %=(Masse Schutzmittel)/(Masse sZP, trocken, 70 °C); Faseranteil in % bezogen auf Masse sZP, trocken, 70 °C | | | | | | | | | |

### Überprüfung der Kurzzeit-Wasseraufnahme von Zellulosedämmstoffen (Ausführungsbeispiel 9 und Referenzbeispiele 2, 3, 5 und 8) sowie von Zellulosefaserstoffen (Kontrollbeispiele 1, 4, 6 und 7).

Die Kurzzeit-Wasseraufnahme von Zellulosedämmstoffen (Ausführungsbeispiel 9 und Referenzbeispiele 2, 3, 5 und 8) sowie von Zellulosefaserstoffen (Kontrollbeispiele 1, 4, 6 und 7) wurde in Anlehnung an DIN EN 1609:2013-05, Verfahren A durchgeführt. Das zu prüfende Material wurde bei 23 °C ± 2 °C und 50 °C ± 5 % relativer Luftfeuchte bis zur Massekonstanz klimatisiert. Die Proben einer Variante (n = 2) mit einer Masse von jeweils 87 g wurden je in ein Plexiglasrohr (Innendurchmesser: 127 mm, Höhe: 248 mm) 15 cm hoch eingefüllt, sodass sich eine Rohdichte von 45 kg/m³ je Probe einstellte. Die Plexiglasrohre wurden vorher an ihrer Unterseite mit einem Drahtgewebe (Maschenweite: 0,05 mm) und einer Kabelschelle verschlossen, sodass die Fasern des Zellulosedämmstoffs bzw. des Zellulosefaserstoffs nicht heraus gespült werden konnten. Jeweils 2 gefüllte Probengefäße einer Variante wurden in Kunststoffschalen mit den Abmessungen von 430 mm (Breite) x 530 mm (Länge) x 100 mm (Höhe) mit 8 mm hohen Erhebungen auf dem Boden gestellt und beschwert. Anschließend wurde in die Prüfwanne Leitungswasser (22 °C ± 1 °C) eingefüllt. Der Wasserspiegel wurde auf 2 cm ± 0,5 cm eingestellt und die Proben für 1 h, 2 h, 4 h und 24 h darin gelagert. Nach der jeweiligen Lagerungszeit wurde die Kurzzeit-Wasseraufnahme bestimmt. Die Gefäße einer Variante wurden dafür per Hand entnommen und für 1 min über der Wanne abgetropft. Dann wurden sie mit einem Winkel von ca. 45° für 10 min in eine trockene Wanne gestellt, ehe das Gewicht aufgenommen wurde. Der Wasserspiegel wurde nach jeder durchgeführten (und vor jeder neuen) Messung wieder auf 2 cm ± 0,5 cm eingestellt. Die Ergebnisse des Versuchs sind in Tabelle 2 dargestellt.

**Tabelle 2: Ergebnisse der Überprüfung der Kurzzeit-Wasseraufnahme von Zellulosedämmstoffen (Ausführungsbeispiel 9 und Referenzbeispiele 2, 3, 5 und 8) sowie von Zellulosefaserstoffen (Kontrollbeispiele 1, 4, 6 und 7).**

| **Beispiel** | **Nr.** | **Bezeichnung** | **Faser anteil** | **Probe** | **Kurzzeit-Wasseraufnahme in g** | | | | **normierte Kurzzeit-Wasseraufnahme in g** |
|---|---|---|---|---|---|---|---|---|---|
| | | | | | **1 h** | **2 h** | **4 h** | **24 h** | **24 h** |
| Kontrolle | 1 | 0 | 1 | a | 290 | 333 | 358 | 436 | 436 |
| | | | | b | 308 | 334 | 364 | 437 | 437 |
| Referenz | 2 | RefA | 0,825 | a | 239 | 270 | 296 | 352 | 427 |
| | | | | b | 251 | 271 | 302 | 360 | 436 |
| Referenz | 3 | RefB | 0,88 | a | 286 | 312 | 337 | 416 | 473 |
| | | | | b | 271 | 304 | 329 | 415 | 472 |
| Kontrolle | 4 | LMK | 1 | a | 294 | 318 | 347 | 427 | 427 |
| | | | | b | 273 | 292 | 331 | 400 | 400 |
| Referenz | 5 | LMK + FSM A | 0,825 | a | 244 | 280 | 298 | 364 | 441 |
| | | | | b | 236 | 272 | 316 | 380 | 461 |
| Kontrolle | 6 | 1 % OS | 0,99 | a | 211 | 239 | 269 | 328 | 331 |
| | | | | b | 218 | 250 | 279 | 344 | 348 |
| Kontrolle | 7 | 1 % OS + 1 % ZS | 0,98 | a | 201 | 243 | 267 | 323 | 330 |
| | | | | b | 212 | 254 | 274 | 344 | 351 |
| Referenz | 8 | 1 % OS + FSMA | 0,815 | a | 136 | 175 | 197 | 245 | 301 |
| | | | | b | 138 | 159 | 186 | 230 | 282 |
| Ausführungsbe ispiel | 9 | 1 % OS + 1 % ZS + FSM A | 0,805 | a | 154 | 191 | 216 | 260 | 323 |
| | | | | b | 166 | 199 | 214 | 268 | 333 |

| | | | | | | | | | |
|---|---|---|---|---|---|---|---|---|---|
| Legende: FSM=Flammschutzmittel; FSM A=Phoshat-haltig ((NH₄)₃PO₄/ Erdalkalisalz starker Säuren); FSM B=Bor-basiert (B(OH)₃/Al(OH)₃); LM=Lösungsmittel Ethanol (50 %); Suspension=Schutzmittel + LM; 0=Nullprobe; Ref A=Zellulosedämmstoff mit Flammschutmittel A; Ref B=Zellulosedämmstoff mit Flammschutzmittel B); LMK=Lösungsmittelkontrolle; OS=Oleanolsäure; ZS=Zimtsäure; x %=(Masse Schutzmittel)/(Masse sZP, trocken, 70 °C); normiert: Bezogen auf den Faseranteil der Erzeugnisse | | | | | | | | | |

**Tabelle 3: Bezug der normierten Kurzzeit-Wasseraufnahmen von Ausführungsbeispiel 9 (Probe b) und Referenzbeispiel 8 (Probe a) zu den normierten Kurzzeit-Wasseraufnahmen der Referenzbeispiele 2 (Probe a), 3 (Probe b) und 5 (Probe a).**

| **Beispiel** | **Nr.** | **Bezeichnung** | **Probe** | **normierte Kurzzeit-Wasseraufnahme nach 24 h** | | | |
|---|---|---|---|---|---|---|---|
| | | | | **in g** | **in %, bezogen auf Referenz 2** | **in %, bezogen auf Referenz 3** | **in %, bezogen auf Referenz 5** |
| Referenz | 2 | RefA | a | 427 | 100 | 91 | 97 |
| Referenz | 3 | RefB | b | 472 | 111 | 100 | 107 |
| Referenz | 5 | LMK + FSM A | a | 441 | 103 | 93 | 100 |
| Referenz | 8 | 1 % OS + FSM A | a | 301 | 71 | 64 | 68 |
| Ausführungsbeispiel | 9 | 1% OS + 1% ZS + FSM A | b | 333 | 78 | 71 | 76 |

| | | | | | | | |
|---|---|---|---|---|---|---|---|
| Legende: FSM=Flammschutzmittel; FSM A=Phoshat-haltig ((NH₄)₃PO₄/ Erdalkalisalz starker Säuren); FSM B=Bor-basiert (B(OH)₃/Al(OH)₃); LM=Lösungsmittel Ethanol (50 %); Suspension=Schutzmittel + LM; 0=Nullprobe; Ref A=Zellulosedämmstoff mit Flammschutzmittel A; Ref B=Zellulosedämmstoff mit Flammschutzmittel B); LMK=Lösungsmittelkontrolle; OS=Oleanolsäure; ZS=Zimtsäure; x %=(Masse Schutzmittel)/(Masse sZP, trocken, 70 °C) | | | | | | | |

### Überprüfung der Schimmelpilzbeständigkeit von Zellulosedämmstoffen (Ausführungsbeispiel 9 und Referenzbeispiele 2, 3, 5 und 8) sowie von Zellulosefaserstoffen (Kontrollbeispiele 1, 4, 6 und 7).

Der an den Zellulosedämmstoffen (Ausführungsbeispiel 9 und Referenzbeispiele 2, 3, 5 und 8) sowie an den Zellulosefaserstoffen (Kontrollbeispiele 1, 4, 6 und 7) durchgeführte Test wurde unter unsterilen Bedingungen durchgeführt.

In Anlehnung an DIN EN 15101-1:2013-12 und IHD VA 20-24/1:2008 wurden von Zellulosedämmstoffen (Ausführungsbeispiel 9 und Referenzbeispiele 2, 3, 5 und 8) sowie von Zellulosefaserstoffen (Kontrollbeispiele 1, 4, 6 und 7) Proben (n = 4) mit einer Masse von 3,25 g in je einen Kunststoffbecher mit einem Volumen von 50 ml überführt (Rohdichte: 65 kg/m³ je Probe). Jede Probe wurde mit 30 µl einer Schimmelpilz-Sporensuspension beimpft. Die Mischkultur bestand aus Sporen der Spezies *Aspergillus niger* DSM 1957, *Chaetomium globosum* DSM 1962, *Penicillium pinophilum* DSM 1960, *Paecilomyces variotii* DSM 1961 und *Trichoderma virens* DSM 1963. Die Sporenkonzentration der einzelnen Pilzspezies betrug 2,02 x 10⁶/ml bis 4,29 x 10⁶/ml. Danach wurden die Proben bei 28 °C ± 2 °C und 95 % ± 4 % relative Luftfeuchtigkeit für 28 Tage inkubiert. Es wurde eine Dokumentation des Befalls und des Bewuchses durch Schimmelpilze mit einem Auflichtmikroskop bei 50-facher Vergrößerung und eine anschließende Bewertung nach Tabelle 4 vorgenommen.

**Tabelle 4: Bewertung des Befalls und des Bewuchses durch Schimmelpilze von Zellulosedämmstoffen sowie von Zellulosefaserstoffen.**

| **Beschreibung** | **Kurzbeschreibung Befall und Bewuchs** | **Bewertung** |
|---|---|---|
| Befall und Bewuchs durch Schimmelpilze mit bloßem Auge zu erkennen | stark | 3 |
| Befall und Bewuchs durch Schimmelpilze mit bloßem Auge schwer zu erkennen, bei 50-facher Vergrößerung Bewuchs fast auf der ganzen Oberfläche zu erkennen | mäßig | 2 |
| Befall und Bewuchs durch Schimmelpilze mit bloßem Auge nicht zu erkennen, bei 50-facher Vergrößerung jedoch sichtbar, allerdings meist nur auf Impfstellen oder am Rand | leicht | 1 |
| kein Befall und Bewuchs durch Schimmelpilze auf der Prüfoberfläche bei Betrachtung im Auflichtmikroskop bei 50-facher Vergrößerung | kein | 0 |

Nach einer Inkubationszeit von 28 Tagen wurden die Proben ausgebaut und der Befall und der Bewuchs durch Schimmelpilze bewertet (Tabelle 5).

**Tabelle 5: Ergebnisse der Überprüfung der Schimmelpilzbeständigkeit von Zellulosedämmstoffen (Ausführungsbeispiel 9 und Referenzbeispiele 2, 3, 5 und 8) sowie von Zellulosefaserstoffen (Kontrollbeispiele 1, 4, 6 und 7).**

| **Beispiel** | Kontrolle | Referenz | Referenz | Kontrolle | Referenz | Kontrolle | Kontrolle | Referenz | Ausführungsbeispiel |
|---|---|---|---|---|---|---|---|---|---|
| **Nr.** | 1 | 2 | 3 | 4 | 5 | 6 | 7 | 8 | 9 |
| **Bezeichnung** | 0 | Ref A | Ref B | LMK | LMK + FSM A | 1 % OS | 1 % OS + 1% ZS | 1% OS + FSM A | 1 % OS + 1 % ZS + FSM A |
| **Bewertung** | 3 | 3 | 0 | 3 | 3 | 3 | 3 | 3 | 0 |

| | | | | | | | | | |
|---|---|---|---|---|---|---|---|---|---|
| Legende: FSM=Flammschutzmittel; FSM A=Phoshat-haltig ((NH₄)₃PO₄/ Erdalkalisalz starker Säuren); FSM B=Bor-basiert (B(OH)₃/Al(OH)₃); LM=Lösungsmittel Ethanol (50 %); Suspension=Schutzmittel + LM; 0=Nullprobe; Ref A=Zellulosedämmstoff mit Flammschutmittel A; Ref B=Zellulosedämmstoff mit Flammschutzmittel B); LMK=Lösungsmittelkontrolle; OS=Oleanolsäure; ZS=Zimtsäure; x %=(Masse Schutzmittel)/(Masse sZP, trocken, 70 °C) | | | | | | | | | |

### Literatur

- N. N. fhocus Forschungsmagazin der FH Münster, 2005, 8, 26-27 Salbei konzentriert - Wirkstoff der alten Heilpflanze effektiv gewinnen
- Roffael, E.; Schneider, T.; Dix, B.; Buchholz, T. Holz als Roh- und Werkstoff, 2005, 63, 192-203 Zur Hydrophobierung von mitteldichten Faserplatten (MDF) mit Paraffinen Teil 1: Einfluss der chemischen Zusammensetzung des Paraffins und des Emulgatortyps auf die Hydrophobierung von MDF
- Jäger, S.; Scheffler, A.; Schmellenkamp, H. Pharmazeutische Zeitung, 2006, 22, 1-10, Pharmakologie ausgewählter Terpene
- Bisogno, F.; Mascoti, L.; Sanchez, C.; Garibotto, F.; Giannini, F.; Kurina-Sanz, M.; Enriz, R. J. Agric. Food. Chem. 2007, 55, 10635-10640 Structure-Antifungal Activity Relationship of Cinnamic Acid Derivatives
- Schmandke, H. Ernährungs Umschau, 2009, 56, 92-95 Triterpenoide in Oliven - Blutglukose- und -lipidsenkende sowie antikanzerogene Wirkung
- van Bergen, Andrea https://biooekonomie.de/mit-zimtsaeure-gegen-bazillen, 2012, 15.02.2012 Mit Zimtsäure gegen Bazillen
- Korošec, B.; Sova, M., Turk, S.; Kraševec, N.; Novak, M.; Lah, L.; Stojan, J.; Podobnik, B.; Berne, S.; Zupanec, N.; Bunc, M.; Gobec, S.; Komel, R. Journal of applied Microbiology 2013, 116, 955-966 Antifungal activity of connamic acid derivatives involves inhibition of benzoate 4-hydroxylase (CYP53)
- Delenk, H.; Haas, C.; Gantz, S.; Marchev, A.; Pavlov, A.; Steudler, S.; Unbehaun, H.; Steingroewer, J.; Bley, T.; Wagenführ, A. PRO LIGNO, 2015, 11 (4), 268-274, ISSN (Online) 2069-7430 Influence of Salvia Officinalis L. Hairy Roots Derived Phenolic Acids on the Growth of Chaetomium Globosum and Trichoderma Viride
- Bahrami, Y.; Franco, C. M. M. Marine Drugs, 2016, 14, 147 Acetylated Triterpene Glycosides and Their Biological Activity from Holothuroidea Reported in the Past Six Decades
- DIN EN 15101-1:2013-12
   *Wärmedämmstoffe für Gebäude* - *An der Verwendungsstelle hergestellter Wärmedämmstoff aus Zellulosefüllstoff (LFCI)* - *Teil 1: Spezifikation für die Produkte vor dem Einbau; Deutsche Fassung EN 15101-1:2013*
- IHD VA 20-24/1:2008
   *Verfahrensanweisung 20-24*/*1, Institut für Holztechnologie Dresden gGmbH, Prüfung der Schimmelpilzbeständigkeit von Dämmstoffen*

## Patentansprüche

1. Zusammensetzung zur Verbesserung der Beständigkeit gegenüber Schimmelpilzen, enthaltend:
(a) ein pentazyklisches Triterpen oder pentazyklisches Triterpen-Saponin,
(b) ein Carbonsäure-substituiertes Styrolderivat und
(c) eine Phosphat-haltige Verbindung.

2. Zusammensetzung gemäß Anspruch 1,
wobei das Carbonsäure-substituierte Styrolderivat Zimtsäure ist.

3. Zusammensetzung gemäß einem der Ansprüche 1 bis 2, wobei das pentazyklische Triterpen oder pentazyklische Triterpen-Saponin ein Oleanan ist.

4. Zusammensetzung gemäß Anspruch 3, wobei das Oleanan Oleansäure ist.

5. Zusammensetzung gemäß einem der Ansprüche 1 bis 4, wobei das Gewichtsverhältnis der Inhaltsstoffe (a) : (b) : (c) im Bereich (0,5 - 2) : (0,5 - 2) : (5 - 15) liegt.

6. Zusammensetzung gemäß einem der Ansprüche 1 bis 5 in Form einer wasserbasierten Dispersion, Suspension, Emulsion oder Lösung.

7. Material aufweisend die Zusammensetzung gemäß einem der Ansprüche 1 bis 6.

8. Verwendung einer Zusammensetzung gemäß einem der Ansprüche 1 bis 6 als Schutzmittel zur Verbesserung der Beständigkeit gegenüber Schimmelpilzen und/oder zur Verringerung der Wasseraufnahme von Materialien.

9. Verfahren zur Verbesserung der Beständigkeit eines Materials gegenüber Schimmelpilzen und/oder zur Verringerung der Wasseraufnahme mit dem Schritt:
• Aufbringen der Zusammensetzung gemäß einem der Ansprüche 1 bis 6 oder schrittweises Aufbringen der in der Zusammensetzung enthaltenen Einzelkomponenten auf das zu behandelnde Material.

10. Verfahren gemäß Anspruch 9, wobei das Material aus nachwachsenden Rohstoffen ausgewählt ist.

11. Verfahren gemäß einem der Ansprüche 9 oder 10, wobei das Material aus Holzwerkstoffen und Dämmstoffen ausgewählt ist.

12. Verfahren gemäß einem der Ansprüche 9 bis 11, wobei das Material ein Einblasdämmstoff auf Basis von Holz und/oder Papier ist.

13. Verfahren gemäß einem der Ansprüche 9 bis 12, wobei das Material ein Zellulose-Einblasdämmstoff ist.

14. Verwendung der Zusammensetzung, enthaltend:
(a) ein pentazyklisches Triterpen oder pentazyklisches Triterpen-Saponin, und
(b) ein Carbonsäure-substituiertes Styrolderivat als Zusatz zu Phosphat-haltigen Flammschutzmitteln.

## Claims

1. Composition for improving the resistance to mould, comprising:
(a) a pentacyclic triterpene or pentacyclic triterpene saponin,
(b) a carboxylic acid substituted styrene derivative, and
(c) a phosphate containing compound.

2. Composition according to claim 1, wherein the carboxylic acid substituted styrene derivative is cinnamic acid.

3. Composition according to any of claims 1 to 2, wherein the pentacyclic triterpene or pentacyclic triterpene saponin is an oleanane.

4. Composition according to claim 3, wherein the oleanane is oleanolic acid.

5. Composition according to any of claims 1 to 4, wherein the mass ratio of substance
(a) : (b) : (c) is in the range (0.5 - 2) : (0.5 - 2) : (5 - 15).

6. Composition according to any of claims 1 to 5 in the form of a water-based dispersion, suspension, emulsion or solution.

7. Material comprising the composition according to any of claims 1 to 6.

8. Use of the composition according to any of claims 1 to 6 as protecting agent for improving the resistance to mould, and/or
for lowering the water uptake of materials.

9. Method for improving the resistance to mould and/or for lowering the water uptake of materials with the step:
• Application of the composition according to any of claims 1 to 6 or stepwise application of the single components contained in the composition on the material to be treated.

10. Method according to claim 9, wherein the material is selected from renewable resources.

11. Method according to any of claims 9 or 10, wherein the material is selected from wooden materials and insulating materials.

12. Method according to any of claims 9 to 11, wherein the material is a blow-in insulating material based on wood and/or paper.

13. Method according to any of claims 9 to 12, wherein the material is a cellulose blow-in insulating material.

14. Use of a composition, containing:
(a) a pentacyclic triterpene or pentacyclic triterpene saponin, and
(b) a carboxylic acid substituted styrene derivative
as an additive to phosphate containing flame retardants.

## Revendications

1. Composition permettant d'améliorer la résistance aux moisissures, contenant :
(a) un triterpène pentacyclique ou une saponine triterpène pentacyclique,
(b) un dérivé de styrène substitué par un acide carboxylique et
(c) un composé contenant du phosphate.

2. Composition selon la revendication 1,
dans laquelle le dérivé de styrène substitué par un acide carboxylique est l'acide cinnamique.

3. Composition selon l'une des revendications 1 à 2, dans laquelle le triterpène pentacyclique ou la saponine triterpène pentacyclique est un oléanane.

4. Composition selon la revendication 3, dans laquelle l'oléanane est l'acide oléique.

5. Composition selon l'une des revendications 1 à 4, dans laquelle le rapport en poids des composants (a) : (b) : (c) est compris entre (0,5 et 2) : (0,5 et 2) : (5 et 15).

6. Composition selon l'une des revendications 1 à 5 sous forme de dispersion, de suspension, d'émulsion ou de solution aqueuse.

7. Matière présentant la composition selon l'une des revendications 1 à 6.

8. Utilisation d'une composition selon l'une des revendications 1 à 6 comme agent protecteur permettant d'améliorer la résistance aux moisissures et/ou de réduire l'absorption d'eau de matières.

9. Procédé permettant d'améliorer la résistance d'une matière aux moisissures et/ou de réduire l'absorption d'eau par l'étape :
• d'application de la composition selon l'une des revendications 1 à 6 ou d'application étape par étape des composants individuels contenus dans la composition sur la matière à traiter.

10. Procédé selon la revendication 9, dans lequel la matière est choisie parmi les matières premières renouvelables.

11. Procédé selon l'une des revendications 9 ou 10, dans lequel la matière est choisie parmi les matériaux à base de bois et les matériaux isolants.

12. Procédé selon l'une des revendications 9 à 11, dans lequel la matière est un matériau isolant soufflé à base de bois et/ou de papier.

13. Procédé selon l'une des revendications 9 à 12, dans lequel la matière est un isolant cellulosique soufflé.

14. Utilisation de la composition contenant :
(a) un triterpène pentacyclique ou une saponine triterpène pentacyclique, et
(b) un dérivé de styrène substitué par un acide carboxylique comme additif aux agents ignifugeants contenant du phosphate.
